# FASCICULE DE BREVET EUROPEEN

(11) **EP 1 208 782 B1**
(45) Date de publication et mention de la délivrance du brevet: **25.08.2004**
(21) Numéro de dépôt: 00125972.0
(22) Date de dépôt: 28.11.2000
(51) Int. Cl.: A47J 31/40

(54) **Dispositif de percolation**
Perkolationsvorrichtung
Percolation device

(43) Date de publication de la demande: 29.05.2002
(73) Titulaire: SOCIETE DES PRODUITS NESTLE S.A., 1800 Vevey (CH)
(72) Inventeur: Yoakim, Alfred, 1806 St-Legier-la-Chiesaz (CH); Masek, Petr, 1614 Granges (CH)
(74) Mandataire: Borne, Patrice Daniel

(56) Documents cités:
- WO-A-00/64318
- DE-U- 29 915 025
- FR-A- 2 617 389
- US-A- 6 026 732

## Description

La présente invention concerne un dispositif de percolation destiné à être utilisé dans une machine pour préparer des boissons chaudes telles que du café par exemple. Plus particulièrement l'invention a pour objet un dispositif de percolation destiné aux machines de type expresso utilisant des doses de café ou d'une autre substance conditionnées dans des capsules.

Les machines à café connues de ce type (voir par example US-A-6026732) comportent généralement une coupelle destinée à recevoir une capsule contenant une dose de la boisson à infuser. La coupelle est ensuite amenée manuellement ou automatiquement vers une tête de percolation comprenant une aiguille percée qui permet l'injection d'eau et/ou de vapeur dans la capsule.

Un des inconvénients des machines existantes réside dans le fait qu'il n'est pas possible d'adapter la concentration de la boisson préparée, les capsules contenant toutes la même dose de produit à infuser. Le seul paramètre sur lequel l'utilisateur peut intervenir est la quantité d'eau injectée dans la capsule.

Ainsi, si l'utilisateur désire une boisson concentrée dans une tasse de grande contenance, il devra utiliser successivement deux capsules de produit pour obtenir la concentration désirée.

Le but de l'invention est de résoudre ce problème en proposant un dispositif de percolation qui fonctionne avec des capsules de contenance et de dimensions différentes, sans que l'utilisateur ne doive effectuer de manipulations particulières selon le type de capsules utilisées.

A cet effet, on prévoit des capsules, généralement réalisées en aluminium, dont la contenance est variable en fonction de la concentration désirée de la boisson et un dispositif de percolation équipant la machine qui se distingue par les caractéristiques énoncées à la revendication 1.

Le dispositif de percolation objet de l'invention va maintenant être décrit en référence aux dessins annexés qui représentent, à titre d'exemple non limitatif, un mode d'exécution du dispositif de percolation.
La figure 1 illustre schématiquement le corps d'une machine à café équipée d'un dispositif de percolation selon l'invention, la machine étant en position de chargement de la capsule de café.
La figure 2 est une vue similaire à celle de la figure 1, la dose de café contenue dans la capsule étant en position de service prête à être infusée.
La figure 3 est une vue en coupe du dispositif de percolation selon la ligne A-A de la figure 1, le dispositif étant en position de repos.
La figure 4 est une vue en coupe similaire à celle de la figure 3 dans une position intermédiaire, une capsule de petite dimension étant introduite dans le dispositif de percolation.
La figure 5 est une vue identique à celle de la figure 4, le dispositif de percolation étant en bout de course, prêt à l'emploi.
La figure 6 est une vue en coupe similaire à celle de la figure 4, lorsqu'une capsule de grande dimension est introduite dans le dispositif.
La figure 7 est une vue en coupe similaire à celle de la figure 5, une capsule de grande dimension étant chargée dans la chambre de percolation.
La figure 8 est une vue de côté d'une première forme d'exécution d'une capsule contenant une double dose de café.
La figure 9 est une vue de côté d'une seconde forme d'exécution d'une capsule contenant une double dose de café.
Les figures 10 et 11 illustrent respectivement deux formes d'exécution des capsules illustrées aux figures 8 et 9 mais dont la contenance est adaptée à recevoir une dose unique de café.

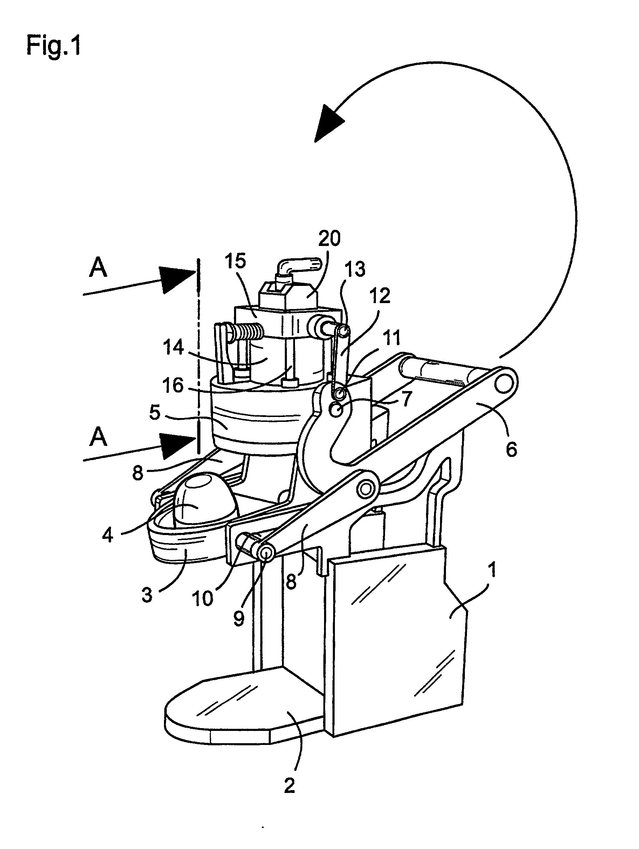

En référence à la figure 1, le bâti 1 de la machine pour préparer des boissons chaudes comporte un socle 2 pour accueillir le récipient (non représenté) destiné à recevoir la boisson infusée. La partie supérieure du bâti 1 comprend un mécanisme permettant d'amener une coupelle de chargement 3 recevant une capsule 4 contenant une dose du produit à infuser en regard d'un embout de percolation 5. Ce mécanisme est actionné à l'aide d'une poignée de commande 6 pivotée dans le bâti 1 autour d'un axe 7. La poignée de commande 6 est conformée comme une crosse présentant une partie rectiligne prolongée d'une partie courbe. La poignée 6 est reliée, par l'intermédiaire de deux biellettes 8, à la coupelle 3 au moyen d'axes 9 qui coulissent librement dans des fentes 10 pratiquées dans les bords latéraux du bâti.

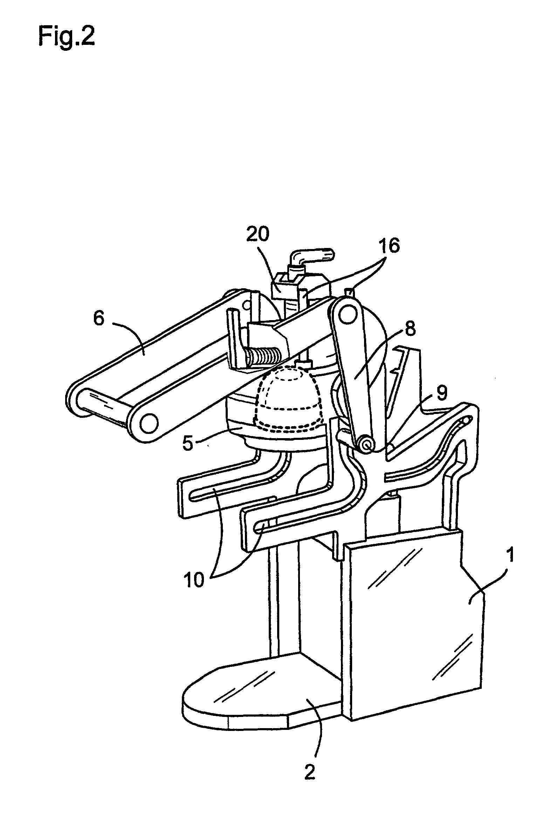

Lors de la course de la poignée, la coupelle 3 portant la capsule 4 est amenée progressivement en dessous de l'embout de percolation 5. En fin de course comme illustré à la figure 2, la capsule 4 est introduite dans la chambre de percolation 14 qui sera décrite ci-dessous et la coupelle 3 est maintenue de manière étanche contre l'embout de percolation.

L'extrémité courbe de la poignée de commande 6 est également reliée par des axes 11 à deux tiges 12 solidaires au moyen d'axes 13 de la partie supérieure de la chambre de percolation 14. La chambre de percolation 14 est constituée d'une partie cylindrique solidaire d'une pièce de maintien 15 présentant une forme carrée.

Les quatre coins de la pièce de maintien 15 sont percés de trous de sorte que la chambre de percolation 14,15 peut coulisser verticalement, guidée par des axes 16 solidaires du bâti. De cette manière la chambre de percolation 14 effectue un mouvement dans le plan vertical sous l'action de la poignée de commande 6, la pièce 15 étant entraînée par la poignée de commande 6 par l'intermédiaire des tiges 12 et des axes 13.

Ainsi grâce à cette double liaison cinématique, la poignée de commande 6, lors d'un mouvement dans le sens de la flèche, amène progressivement la coupelle 3 en dessous de l'embout de percolation tout en abaissant la chambre de percolation 14 de manière à recouvrir la capsule 4 contenant le produit à infuser. La fin de la course est illustrée à la figure 2 et montre le dispositif en position de service, prêt à infuser la boisson. Dans cette position, la capsule 4 est située dans la chambre de percolation 14 et la coupelle 3 est maintenue contre l'embout de percolation de manière étanche.

D'autres organes mécaniques peuvent d'ailleurs être envisagés pour permettre le déplacement de la coupelle 3 depuis une position de chargement vers une position de service dans la chambre de percolation, cette dernière ayant effectué un mouvement dans le plan vertical depuis une position haute vers une position basse de service.

La partie arrière de la coupelle 3 présente deux pattes d'extraction situées à l'extrémité de montants. Lors de l'ouverture du mécanisme par un mouvement de la poignée de commande 6 dans le sens contraire de la flèche, les pattes d'extraction sont amenées à proximité de la périphérie de la chambre de percolation contenant la capsule et permettent ainsi, en appuyant sur la base de la capsule, de l'extraire vers un bac situé dans la partie arrière du bâti 1. Lors de l'utilisation d'une cartouche dont les dimensions correspondent à celles de la tête de percolation décrite ci-dessous, les pattes d'extraction supérieures permettront d'extraire la capsule. Lors de l'utilisation de capsules de plus grandes dimensions, c'est-à-dire dont les dimensions excèdent celles de la chambre de percolation, ce sont les pattes d'extraction inférieures qui interagissent avec le rebord formant la base de la capsule pour l'extraire de la chambre.

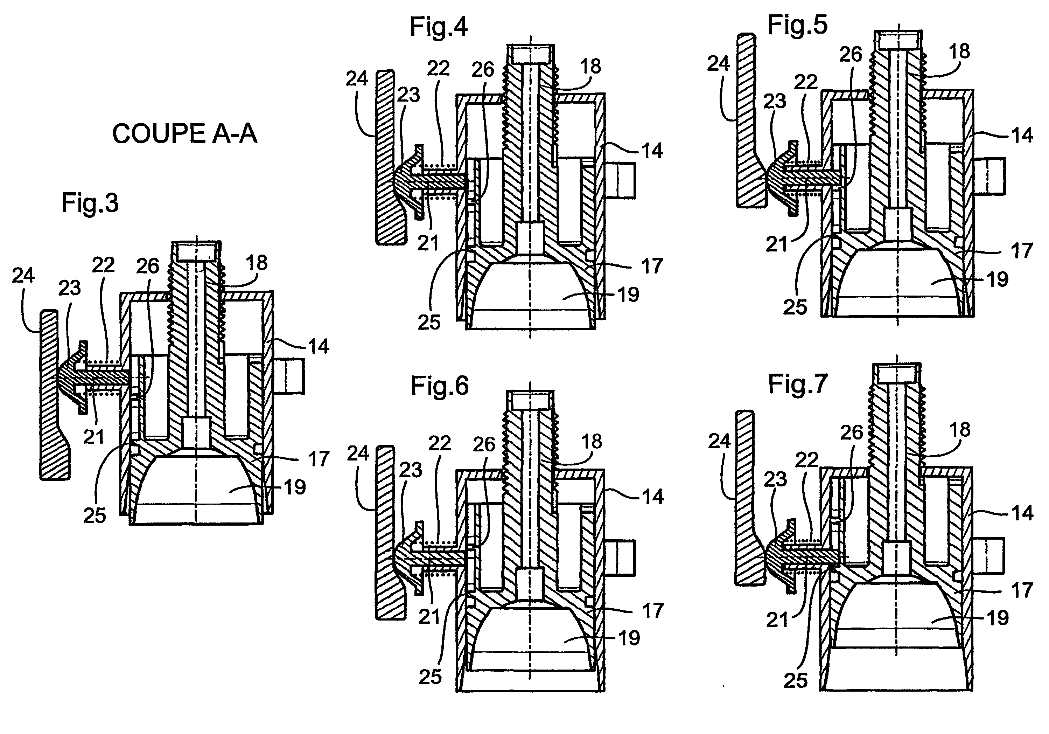

La chambre de percolation 14 comporte une tête de percolation 17 (voir figures 3 à 7), montée coulissante dans la chambre de percolation cylindrique 14. Cette tête de percolation 17 comporte une tige cylindrique creuse 18 dont l'extrémité supérieure coulisse librement dans un trou pratiqué dans la pièce 15 de la chambre de percolation 14. La partie inférieure de la tête de percolation 17 est d'un diamètre sensiblement égal à celui de la chambre de percolation 14 et présente un évidement 19 conformé comme une cloche dont les dimensions correspondent à celles des capsules contenant le produit à infuser. Au centre de l'évidement 19 se trouve une aiguille (non représentée) dont la pointe dirigée vers le bas permet de percer la partie supérieure de la capsule afin d'y injecter de l'eau et/ou de la vapeur par le conduit d'admission d'eau ménagé dans la tige 18. La course de la tête de percolation 17 est limitée dans son déplacement axial par une pièce terminale 20 solidaire de la tige 18 et émergeant de la pièce de maintien 15. L'admission d'eau ou de vapeur se fait par l'intermédiaire d'un conduit d'amenée d'eau prévu sur la pièce 20.

Un organe d'arrêt limitant la course axiale de la tête de percolation 17 est agencé dans la pièce de maintien 15 de la chambre de percolation 14. Cet organe d'arrêt comprend une tige 21 coulissant horizontalement contre l'action d'un ressort 22 dans un tube débouchant dans un évidement pratiqué dans la pièce de maintien 15 de la chambre de percolation. Cette tige 21 est terminée par une tête 23 qui est poussée, sous l'action du ressort 22, contre une came 24 solidaire du bâti 1. La came 24 présente dans sa partie inférieure une levée qui entre en contact avec la tête 23 de l'organe d'arrêt lorsque, sous l'action de la poignée de commande 6, la chambre de percolation est amenée en position basse.

Ainsi lors du déplacement vertical de la chambre de percolation 14, la tige 21 de l'organe d'arrêt pénètre dans la pièce 15 de la chambre de percolation dès que la tête 23 entre en contact avec la levée de la came 24.

Cet organe d'arrêt 21,22,23,24 a pour fonction de bloquer dans une position définie la tête de percolation 17 lorsque ladite chambre est en position de service, en fin de course de la poignée de commande. A cet effet, la surface externe de la tête de percolation présente une rainure longitudinale interrompue par deux nervures annulaires 25 et 26 qui coopèrent avec l'extrémité de la tige 21 en fonction de la position relative de la tête de percolation 17 à l'intérieur de la chambre de percolation 14.

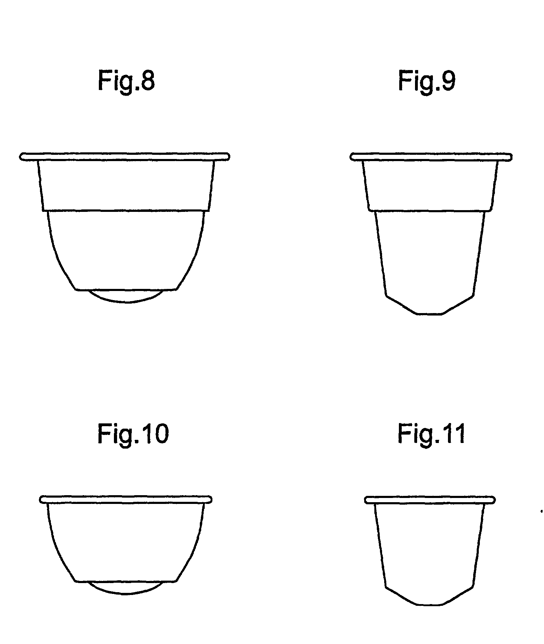

Le fonctionnement de la tête de percolation va maintenant être expliqué en références aux figures 4 à 7. Les figures 4 et 5 illustrent le dispositif de percolation, dans deux positions différentes lorsqu'il est chargé avec une capsule de dimensions standard telles que celles illustrées aux figures 10 et 11. Les capsules représentées aux figures 10 et 11 ont des dimensions qui correspondent à celles de l'évidement 19 en forme de cloche de la tête de percolation 17 et sont généralement prévues pour contenir une dose unique de produit à infuser. Les figures 6 et 7 sont des vues identiques à celles représentées aux figures 4 et 5 lorsque le dispositif est chargé avec une capsule telle qu'illustrée aux figures 8 ou 9. Les capsules des figures 8 et 9 représentent deux formes d'exécution de capsules pouvant contenir une dose double de produit à infuser. On notera que ces capsules ont une base dont le diamètre est supérieur à celui des capsules des figures 10 et 11 et présentent un épaulement à environ un tiers de leur hauteur. Le diamètre au niveau de l'épaulement des capsules des figures 8 et 9 est sensiblement le même que celui de la base des capsules représentées aux figures 10 et 11.

La figure 4 illustre le dispositif de percolation dans une position proche de celle représentée à la figure 2, c'est-à-dire pratiquement en fin de course de la poignée 6, lorsqu'une capsule de dimension standard a été chargée dans la coupelle 3. La tête de percolation 17 est en position basse, la capsule ayant des dimensions correspondantes à celles de l'évidement 19, aucune force n'est exercée contre la tête de percolation 17 qui en conséquence ne se déplace pas vers le haut. Lorsque la poignée 6 atteint la fin de sa course, comme illustré à la figure 5, la levée de la came 24 exerce une pression sur la tête 23 et force la tige 21 à l'intérieur de la partie supérieure 15 de la chambre de percolation. Dans cette position, la tige 21 est située au-dessus de la nervure supérieure 26 de la tête de percolation 17 et bloque ainsi la tête de percolation en position basse contre la coupelle de manière à permettre le percement de la capsule et l'injection d'eau et/ou de vapeur dans la capsule. Les figures 6 et 7 sont des vues similaires à celles des figures 4 et 5 lorsqu'une capsule de contenance double telles que celles illustrées aux figures 8 ou 9 est introduite dans la coupelle 3. La capsule, de par sa taille, entre en contact avec le fond de l'évidement 19 et repousse la tête de percolation 17 vers le haut. Le déplacement axial de la tête de percolation 17 est possible du fait que cette dernière coulisse librement dans la chambre de percolation, la tige 21 n'ayant pas encore pénétré dans la chambre 14.

En fin de course, comme illustré à la figure 7, la tête de percolation 17 occupe une position haute dans la chambre 14 et la tige 21 est en contact avec la nervure inférieure 25 de la tête de percolation 17 bloquant de ce fait tout déplacement vers le haut de la tête de percolation. Dans cette position, la tête de percolation est en appui sur l'épaulement de la capsule, garantissant l'étanchéité nécessaire lors de l'injection d'eau ou de vapeur.

Grâce au fait que la tête de percolation 17 est montée de manière à pouvoir coulisser librement dans la chambre de percolation, sa positon relative par rapport à la chambre varie selon que l'on introduit dans la coupelle 3 une cartouche de dimension standard ou une cartouche de contenance double. L'organe de blocage 21 22 23 actionné en fin de course par la came 24 coopère avec l'une des nervures 25 ou 26 pour bloquer la tête de percolation dans la chambre dans une position définie correspondant au type de capsule utilisée et permettre ainsi l'injection d'eau ou de vapeur. Ce dispositif de percolation permet d'utiliser au moins deux types de capsules de contenance et de volume différents sans que l'utilisateur n'ait à effectuer de manoeuvres spécifiques en fonction du type de capsule introduite dans la coupelle 3. Dans des variantes, on peut prévoir que la tête de percolation présente plus de deux nervures coopérant avec la tige 21 de l'organe d'arrêt de manière à pouvoir accueillir des capsules de tailles intermédiaires. Dans une variante, les nervures annulaires 25 et 26 peuvent être remplacées par de simples butées.

Des variantes constructives, en particulier sur la façon de réaliser l'organe d'arrêt limitant la course de la tête de percolation dans la chambre peuvent être envisagées sans sortir du cadre de l'invention telle qu'elle est définie dans les revendications.

## Revendications

1. Dispositif de percolation comportant une chambre de percolation (14) montée de manière à pouvoir effectuer un déplacement dans le plan vertical sous l'action d'un organe de commande (6) pour recevoir une capsule de produit à infuser, **caractérisé par le fait qu'**il comporte une tête de percolation (17) montée coulissante axialement dans la chambre de percolation (14), une coupelle de chargement (3) pour la capsule (4) amenée par l'organe de commande (6) en dessous de l'embout de percolation (5) de la chambre de percolation (14) et **par le fait qu'**il comporte un organe d'arrêt pour bloquer la tête de percolation (17) dans la chambre de percolation à une position définie en fonction de la taille de la capsule utilisée.

2. Dispositif selon la revendication 1, **caractérisé par** le fait l'organe d'arrêt est constitué d'une tige 21 pénétrant dans la chambre de percolation (14) contre l'action d'un organe élastique (22) et par le fait que la tige (21) est actionnée par une came 24 solidaire du bâti, lorsque la chambre de percolation (14) atteint sa position de service.

3. Dispositif selon l'une des revendications précédentes, **caractérisé par le fait que** la surface externe de la tête de percolation (17) comporte au moins deux nervures annulaires (25,26) coopérant avec la tige (21) pour définir la position de service de la tête de percolation (17) en fonction de la capsule utilisée.

4. Machine à préparer des boissons chaudes conditionnées dans des capsules, **caractérisée en ce qu'**elle comporte un dispositif de percolation selon l'une des revendications précédentes.

5. Machine à préparer des boissons chaudes selon la revendication 4, **caractérisée par le fait qu'**elle comporte un organe d'extraction comprenant au moins deux pattes d'extraction situées à des niveaux différents sur des montants entraînés par l'intermédiaire de l'organe de commande (6).

## Claims

1. Percolation device comprising a percolation chamber (14) which is fitted such as to be able to carry out displacement on the vertical plane under the action of a control unit (6) in order to receive a capsule of product to be infused, **characterised in that** it comprises a percolation head (17) which is fitted such as to slide axially in the percolation chamber (14), a loading dish (3) for the capsule (4) which is brought by the control unit (6) beneath the percolation end piece (5) of the percolation chamber (14), and **in that** it comprises a stop unit to lock the percolation head (17) in the percolation chamber, in a position defined according to the size of the capsule used.

2. Device according to claim 1, **characterised in that** the stop unit consists of a rod 21 which penetrates in the percolation chamber (14) against the action of a resilient unit (22), and **in that** the rod (21) is activated by a cam 24 which is integral with the frame, when the percolation chamber (14) reaches it service position.

3. Device according to either of the preceding claims, **characterised in that** the outer surface of the percolation head (17) comprises at least two annular ribs (25,26) which co-operate with the rod (21) in order to define the service position of the percolation head (17) according to the capsule used.

4. Machine for preparation of hot drinks packed in capsules, **characterised in that** it comprises a percolation device according to one of the preceding claims.

5. Machine according to claim 4 for preparation of hot drinks, **characterised in that** it comprises an extraction unit comprising at least two extraction lugs situated at different levels on uprights which are driven by means of the control unit (6).

## Patentansprüche

1. Perkolationsvorrichtung, umfassend eine Perkolationskammer (14), die so montiert ist, daß sie unter der Einwirkung eines Bedienungsorgans (6) eine Bewegung in der vertikalen Ebene ausführen kann, um eine Portionspackung mit einem aufzugießenden Produkt aufzunehmen, **dadurch gekennzeichnet, daß** sie einen Perkolationskopf (17), der in der Perkolationskammer (14) axial verschiebbar montiert ist, und eine Schale (3) zum Laden der Portionspackung (4) aufweist, die durch das Bedienungsorgan (6) unter den Perkolationsaufsatz (5) der Perkolationskammer (14) zugeführt wird, und daß sie ein Blockierorgan aufweist, um den Perkolationskopf (17) in der Perkolationskammer in einer Stellung, die in Abhängigkeit von der Größe der verwendeten Portionspackung definiert ist, zu blockieren.

2. Vorrichtung nach Anspruch 1, **dadurch gekennzeichnet, daß** das Blockierorgan aus einer Stange (21) besteht, die in die Perkolationskammer (14) entgegen der Wirkung eines elastischen Organs (22) eintritt, und daß die Stange (21) durch einen mit dem Gestell fest verbundenen Nocken (24) betätigt wird, wenn die Perkolationskammer (14) ihre Betriebsstellung erreicht.

3. Vorrichtung nach einem der vorhergehenden Ansprüche, **dadurch gekennzeichnet, daß** die Außenfläche des Perkolationskopfs (17) mindestens zwei ringförmige Rippen (25, 26) aufweist, die mit der Stange (21) zusammenwirken, um die Betriebsstellung des Perkolationskopfs (17) in Abhängigkeit von der verwendeten Portionspackung zu definieren.

4. Maschine zur Herstellung von in Portionspackungen verpackten heißen Getränken, **dadurch gekennzeichnet, daß** sie eine Perkolationsvorrichtung nach einem der vorhergehenden Ansprüche aufweist.

5. Maschine zur Herstellung von heißen Getränken nach Anspruch 4, **dadurch gekennzeichnet, daß** sie ein Auszugsorgan aufweist, das mindestens zwei Auszugslappen besitzt, die in verschiedenen Höhen auf Schenkeln angeordnet sind, die über das Bedienungsorgan (6) angetrieben werden.
